(19) Europäisches Patentamt
European Patent Office
Office européen des brevets

(11) **EP 3 159 121 A1**

(12) **EUROPEAN PATENT APPLICATION**
published in accordance with Art. 153(4) EPC

(43) Date of publication:
**26.04.2017 Bulletin 2017/17**

(51) Int Cl.:
***B25J 13/08*** (2006.01)     ***B25J 9/16*** (2006.01)

(21) Application number: **15808904.5**

(22) Date of filing: **17.06.2015**

(86) International application number:
**PCT/KR2015/006153**

(87) International publication number:
**WO 2015/194864 (23.12.2015 Gazette 2015/51)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA**

(30) Priority: **17.06.2014 KR 20140073708**

(71) Applicant: **Yujin Robot Co., Ltd.
Seoul 153-802 (KR)**

(72) Inventors:
• **SHIN, Kyung Chul
Seoul 110-846 (KR)**
• **PARK, Seong Ju
Gunpo-si
Gyeonggi-do 435-802 (KR)**
• **LEE, Jae Young
Gunpo-si
Gyeonggi-do 435-710 (KR)**

(74) Representative: **Capasso, Olga et al
De Simone & Partners SpA
Via Vincenzo Bellini, 20
00198 Roma (IT)**

(54)     **DEVICE FOR UPDATING MAP OF MOBILE ROBOT AND METHOD THEREFOR**

(57)     Disclosed are an apparatus and a method for updating a map of a mobile robot. An apparatus for updating a map of a mobile robot includes a key frame initializing unit which initializes seeds which constitute a key frame at a start position of the mobile robot and a key frame updating unit which when a current position is determined using a given key frame in accordance with movement of a mobile robot, projects seeds of the key frame to update the key frame for the current position using a disparity of the projected seeds.

[FIG. 1]

Description

## CROSS-REFERENCE TO RELATED APPLICATIONS

This application is a continuation of International Application No. PCT/KR2015/006153, filed on June 17, 2015, which claims priority to and the benefit of Korean Patent Application No. 10-2014-0073708 filed in the Korean Intellectual Property Office on June 17, 2014, both of which are hereby incorporated by reference in their entireties.

## TECHNICAL FIELD

The present invention relates to an SLAM technique of a mobile robot, and more particularly, to an apparatus for updating a map of a mobile robot using a stereo camera and a method thereof.

## BACKGROUND ART

Recently, according to development of a robot technology, a mobile robot which sets a route by itself and moves is utilized. In order to allow the mobile robot to efficiently determine a position and move in a space, it is required to allow the mobile robot to recognize a position of the robot on the space while generating a map for a space where the robot moves.

The mobile robot moves by a dead reckoning navigation using a gyroscope and an encoder provided in a driving motor and generates a map by analyzing an image using a camera provided in an upper portion. In this case, when an error is incurred by driving information from the gyroscope and the encoder, image information obtained from the camera is utilized to correct an accumulated error.

However, a position based mobile robot which has been developed until now is developed under an assumption of a movement on a two-dimensional plane using a monocular camera or a laser scanner. However, when the monocular camera is used, it is difficult to know a distance to a feature point. Therefore, as the error of the dead reckoning navigation is increased, lots of errors may be included in the position recognizing result.

Further, since the laser scanner is too expensive to be applied to the mobile robot, studies for using a simultaneous localization and mapping (SLAM) technology which recognizes a space and updates a position using a stereo camera have been increased in recent years.

The SLAM technology based mobile robot performs processes of extracting a corner feature point from an image, creating a map by restoring three-dimensional coordinates of the corner feature point, and recognizing a position.

It is very important for the mobile robot to recognize a space and recognize its own position in the space. Since a mobile robot which does not have the above-described technique has limited mobility and may provide a very limited type of service, the mobile robots are competitively developed.

## SUMMARY OF THE INVENTION

In order to solve the above-mentioned problems in the existing technology, an object of the present invention is to provide an apparatus for updating a map of a mobile robot which, when a current position is determined using a given key frame in accordance with movement of a mobile robot, projects seeds of the key frame to update the key frame for the current position using a disparity of the projected seeds and a method thereof.

Another object of the present invention is to provide an apparatus for recognizing a position of a mobile robot using an ADOG based feature point which estimates a position based on one odometry information selected between odometry information calculated by a stereo image based visual odometry and odometry information calculated by an inertia information based internal odometry and a method thereof.

Still another object of the present invention is to provide an apparatus for recognizing a position of a mobile robot using an ADOG based feature point which extracts a predetermined number of horizontal lines from a stereo image to perform dense stereo alignment along the extracted horizontal lines to obtains distance information to an obstacle as a result and a method thereof.

However, an object of the present invention is not limited to the above description and other objects which have not been mentioned above will be more apparent to those skilled in the art from a reading of the following description.

According to an aspect of the present invention, an apparatus for updating a map of a mobile robot includes a key frame initializing unit which initializes seeds which constitute a key frame at a start position of the mobile robot and a key frame updating unit which when a current position is determined using a given key frame in accordance with movement of a mobile robot, projects seeds of the key frame to update the key frame for the current position using a disparity of the projected seeds.

Preferably, the seed which constitutes the key frame may include an image coordinate, a disparity, a variance of disparity, a pixel value, and a gradient direction.

Preferably, the key frame initializing unit may perform stereo matching on an edge extracted from a photographed stereo image to obtain a depth value and initialize a disparity of the seed of a coordinate which is restored using the depth value with a disparity of a seed within a predetermined distance.

Preferably, the key frame initializing unit may set seeds in the restored coordinate as a first candidate group and set seeds having a magnitude of the gradient which is larger than a threshold value as a second candidate group, and initialize a disparity of the first candidate group to be a disparity of the seed when the distance between adjacent first candidate groups is within a predetermined distance.

Preferably, the key frame updating unit may set a search range in the image using the image and the key frame when the current position is determined, set a matching point using a disparity of seeds projected within the set search area, and update a disparity of the seed in the key frame for the current position based on the set matching point.

Preferably, the key frame updating unit may set a point having the highest similarity within the set search range as the matching point.

Also, The apparatus for updating a map of a mobile robot according to the present invention may further include: a key frame generating unit which generates a key frame in accordance with a predetermined key frame generating condition when the mobile robot moves.

Preferably, the key frame generating unit may check whether to satisfy the predetermined key frame generating condition and when the key frame generating condition is satisfied as the checking result, generates a key frame using a depth value which is obtained by stereo matching.

Preferably, the key frame generating unit may generate a key frame using a depth value obtained by performing stereo matching and some of seeds of the key frame.

Preferably, the key frame generating unit may check a loop closure for the generated key frame to set a key frame which constitutes the key frame set.

According to another aspect of the present invention, a method for updating a map of a mobile robot includes: initializing seeds which constitutes the key frame at a start position of a mobile robot; and updating a key frame for the current position using disparities of the seeds by projecting the seeds of the key frame when the current position is determined using the given key frame in accordance with movement of the mobile robot.

Preferably, the seed which constitutes the key frame may include an image coordinate, a disparity, a variance of disparity, a pixel value, and a gradient direction.

Preferably, in the initializing, stereo matching may be performed on an edge extracted from a photographed stereo image to obtain a depth value and a disparity of the seed of a coordinate which is restored using the depth value may be initialized to a disparity of a seed within a predetermined distance.

Preferably, in the initializing, seeds in the restored coordinate may be set as a first candidate group and seeds having a magnitude of the gradient which is larger than the threshold value may be set as a second candidate group, and a disparity of the first candidate group may be initialized to a disparity of the seed when the distance between adjacent first candidate groups is within a predetermined distance.

Preferably, in the updating, a search range in the image may be set using the image and the key frame when the current position is determined, a matching point may be set using a disparity of seeds projected within the set search area, and a disparity of the seed in the key frame for the current position may be updated based on the set matching point.

Preferably, in the updating, a point having the highest similarity within the set search range may be set as the matching point.

Also, the method for updating a map of a mobile robot according to the present invention may further include: generating a key frame according to a predetermined key frame generating condition when the mobile robot moves.

Preferably, in the generating, it may be checked whether to satisfy the predetermined key frame generating condition and a key frame may be generated using a depth value which is obtained by stereo matching when the key frame generating condition is satisfied as the checking result.

Preferably, in the generating, a key frame may be generated using a depth value obtained by performing stereo matching and some of seeds of the key frame.

Preferably, in the generating, a loop closure for the generated key frame may be checked to set a key frame which constitutes the key frame set.

According to the present invention, when the current position is determined using a given key frame in accordance with the movement of the mobile robot, seeds of the key frame are projected to update the key frame for the current position using a disparity of the projected seeds, thereby improving accuracy of position recognition. Further, according to the present invention, the position is estimated based on one odometry information selected between odometry information calculated from a stereo image based stereo odometry and odometry information calculated from inertia information based internal odometry, thereby reducing a positional error incurred when the mobile robot is tilted or slides.

Further, according to the present invention, a problem vulnerable to a positional error incurred when the mobile robot is tilted or slides is solved so that the position may be stably recognized.

Further, according to the present invention, a predetermined number of horizontal lines is extracted from a stereo image to perform dense stereo alignment along the extracted horizontal lines to obtain distance information to an obstacle as a result, thereby obtaining distance information to an obstacle without attaching an expensive dedicated sensor for measuring a distance.

The foregoing summary is illustrative only and is not intended to be in any way limiting. In addition to the illustrative aspects, embodiments, and features described above, further aspects, embodiments, and features will become apparent by reference to the drawings and the following detailed description.

**BRIEF DESCRIPTION OF THE DRAWINGS**

FIG. 1 is a view illustrating an apparatus for recognizing a position of a mobile robot according to an exemplary embodiment of the present invention.

FIG. 2 is a view illustrating a region of interest of a wide angle camera according to an exemplary embodiment of the present invention.

FIG. 3 is a view illustrating a space recognizing process according to an exemplary embodiment of the present invention.

FIG. 4 is a view illustrating a stereo matching principle according to an exemplary embodiment of the present invention.

FIG. 5 is a view illustrating uncertainty of a three-dimensional point according to an exemplary embodiment of the present invention.

FIG. 6 is a view illustrating three-dimensional information on an edge according to an exemplary embodiment of the present invention.

FIG. 7 is a view illustrating a detailed configuration of a position recognizing unit according to an exemplary embodiment of the present invention.

FIG. 8 is a view illustrating a key frame initializing process according to an exemplary embodiment of the present invention.

FIG. 9 is a view illustrating a key frame generating process according to an exemplary embodiment of the present invention.

FIG. 10 is a view illustrating a key frame updating process according to an exemplary embodiment of the present invention.

FIG. 11 is a view illustrating a search range setting principle using a deviation of disparities.

FIG. 12 is a view illustrating an obstacle sensing process according to an exemplary embodiment of the present invention.

FIG. 13 is a view illustrating a method for recognizing a position of a mobile robot according to an exemplary embodiment of the present invention.

It should be understood that the appended drawings are not necessarily to scale, presenting a somewhat simplified representation of various features illustrative of the basic principles of the invention. The specific design features of the present invention as disclosed herein, including, for example, specific dimensions, orientations, locations, and shapes will be determined in part by the particular intended application and use environment.

In the figures, reference numbers refer to the same or equivalent parts of the present invention throughout the several figures of the drawing.

**DETAILED DESCRIPTION**

Hereinafter, an apparatus for updating a map of a mobile robot and a method thereof according to an exemplary embodiment of the present invention will be described with reference to accompanying drawings. Parts which are required to understand an operation and an effect of the present invention will be mainly described in detail.

In the description of components of an exemplary embodiment, a component having the same name may be denoted by a different reference numeral in some drawings but may be denoted by the same reference numeral even in different drawings. However, even in this case, it does not mean that the component has different functions depending on the exemplary embodiment or the components have the same function in the different exemplary embodiments but the function of each of the components may be determined based on the description of the components in the corresponding exemplary embodiment.

Specifically, according to the present invention, a new method which when a current position is determined using a predetermined key frame in accordance with movement of a mobile robot, projects seeds of the key frame to update the key frame for the current position using a disparity of the projected seeds is suggested.

Further, according to an exemplary embodiment, a position is estimated based on one odometry information selected between odometry information calculated by a stereo image based visual odometry and odometry information calculated by an inertia information based internal odometry, a predetermined number of horizontal lines is extracted from a stereo image to perform dense stereo alignment along the extracted horizontal lines and obtains distance information to an obstacle as a result.

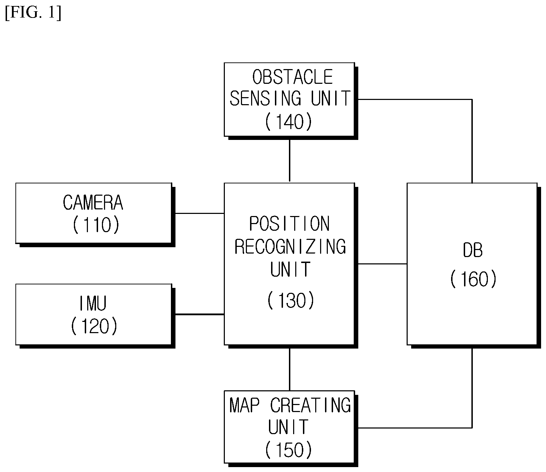

FIG. 1 is a view illustrating an apparatus for recognizing a position of a mobile robot according to an exemplary embodiment of the present invention.

As illustrated in FIG. 1, a mobile robot position recognizing apparatus according to an exemplary embodiment of the present invention includes a camera 110, an inertial measurement unit (IMU) 120, a position recognizing unit 130, an obstacle sensing unit 140, a map creating unit 150, and a database (DB) 160.

Two cameras 110 may be provided to obtain a pair of stereo images, that is, a left image and a right image. Here, two cameras means that two different lens are used to obtain an image at two viewing angles. Further, an example that two lenses are provided in one image capturing device to obtain two images is also same meaning. In this case, the camera 110 may be mounted to have a predetermined region of interest. Here, the region of interest may be a region to be photographed using the camera 110 provided in the mobile robot.

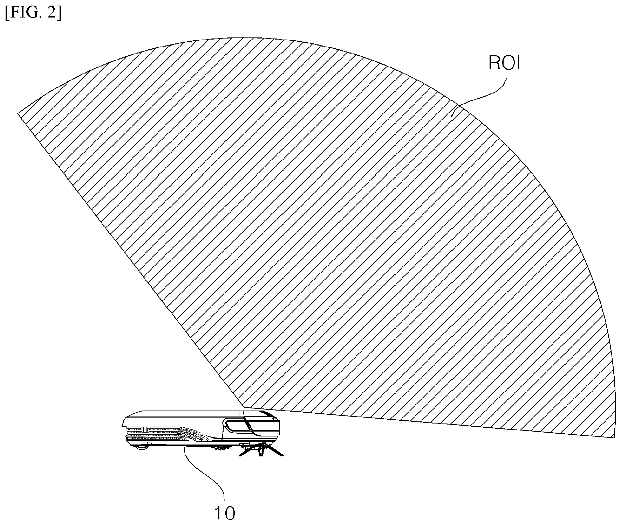

The camera 100 may be desirably a wide angle camera. The wide angle camera is a camera which photographs using a wide angle lens having an angle of view which is larger than that of a general camera lens. It is desirable to use a wide angle camera for the mobile robot to obtain a broader surrounding image. For example, the wide angle camera may be a camera using a fish eye lens. Here, in the wide angle camera, for example, an angle of view of the wide angle lens may be 60 to 270 degrees. In the wide angle camera according to the exemplary embodiment of the present invention, the angle of view is not limited to the range of the above-described angle view and a camera using a lens having various range of an angle of view may be used. FIG. 2 is a view illustrating a region of interest of a wide angle camera according to an exemplary embodiment of the present invention.

As illustrated in FIG. 2, two cameras 110 according to the exemplary embodiment of the present invention are mounted to be directed to both a ceiling and a front side using the wide angle camera in the mobile robot 10 as compared with the mobile robot of the related art which is directed to the ceiling or the front side. Therefore, in the mobile robot, both the ceiling and the front side may be set as regions of interest (ROI).

For example, the camera may photograph regions in both a horizontal direction and a vertical direction using the wide angle lens.

According to the exemplary embodiment of the present invention, both the ceiling and the front side are set as the regions of interest using the camera 110 mounted as described above, so that the feature points may be easily secured. Further, the position may be recognized even when it is difficult to find feature points and an obstacle at the front side may be recognized.

The IMU 120 measures inertia information of the mobile robot, for example, information such as a position, a pose, and the like.

The position recognizing unit 130 receives a stereo image from the camera 110 and recognizes a given space based on the received stereo image whenever the mobile robot moves a predetermined distance.

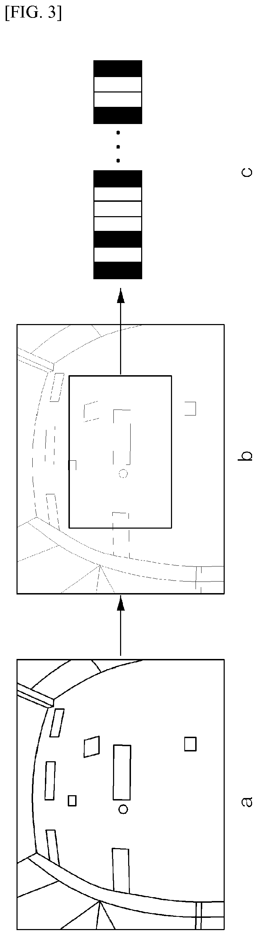

FIG. 3 is a view illustrating a space recognizing process according to an exemplary embodiment of the present invention.

As illustrated in FIG. 3, the position recognizing unit 130 recognizes the given space whenever the mobile robot moves a predetermined distance or a new key frame is generated to create a database thereof.

The position recognizing unit 130 reduces the received stereo image to have a predetermined size to be blurred. Here, the predetermined size may be one eighth of the received stereo image. Referring to FIG. 3, the position recognizing unit 130 reduces the received stereo image (a) and generates a blurred image (b).

The position recognizing unit 130 encodes the blurred stereo image using a binary robust independent elementary features (BRIEF) binary descriptor to generate binary data as the encoding result. Here, the BRIEF binary descriptor may be encoded using a method introduced in {BRIEF}: Computing a Local Binary Descriptor Very Fast, M. Calonder, V. Lepetit, M. Ozuysal, T. Trzcinski, C. Strecha, and P. Fua IEEE Transactions on Pattern Analysis and Machine Intelligence 2012. Here, the binary data may be generated to be 32 byte. FIG. 3C is a reference view illustrating the BRIEF binary descriptor.

The position recognizing unit 130 compares the binary data generated as described above and data indicating an absolute position of the mobile robot in the previously stored key frame to recognize the current position with the absolute position when the absolute position is within a predetermined range as the comparison result.

The reason why the BRIEF binary descriptor is used to recognize a space in the exemplary embodiment of the present invention is because an operating speed is much faster than that of descriptors which are used in the related art, such as SIFT or SURF.

The position recognizing unit 130 receives the stereo image from the camera 110 to obtain first odometry information through a visual odometry based on the input stereo image and receives inertia information from the IMU 120 to obtain second odometry information through an internal odometry based on the input inertia information.

In this case, the position recognizing unit 130 extracts a feature point from the stereo image to trace the extracted feature point and obtains the odometry information using the traced feature point.

Generally, the feature point which is extracted during a preprocessing process is a corner. However, it is difficult to obtain a sufficient amount of feature points in a region where there is no texture, such as a hallway or a large office space.

In order to solve the above-mentioned problem, the position recognizing unit 130 performs stereo matching on an edge. That is, the position recognizing unit 130 extracts an edge from the stereo image and performs sparse stereo matching on the extracted edge to obtain a depth value as a result of sparse stereo matching. Here, the sparse stereo matching is a concept which is distinguished from dense stereo matching. The sparse stereo matching is a matching method which sparsely and quickly matches stereo images, instead of calculating an exact matching result. Therefore, various methods of the related art for adjusting a matching interval or adjusting a search range for the matching may be used.

In order to calculate depth values as many as possible, it is efficient to perform stereo matching on the entire image region. However, in order to achieve real-time property and low false positive rate (FPR), it is more efficient to perform stereo matching on the edge.

Here, the position recognizing unit 130 extracts an edge from the stereo image using various methods of the related art. In this exemplary embodiment of the present invention, the edge may be extracted using approximated difference of Gaussian (APoG) or a gradient.

First, a method of extracting an edge using a gradient will be described.

The position recognizing unit 130 obtains gradients in a first axis direction and a second axis direction from each pixel of the received stereo image and extracts the edge based on the gradients in the first axis direction and the second axis direction.

The first axis and the second axis may be different axes which are orthogonal to each other in a coordinate system of a stereo image plane. Desirably, the first axis and the second axis may be an x-axis and a y-axis of an orthogonal coordinate system formed by the x-axis and the y-axis. Hereinafter, an operation of the position recognizing unit 130 with the x-axis and the y-axis as the first axis and the second axis will be described. Hereinafter, the operation of the position recognizing unit 130 which has been described with reference to the x-axis and the y-axis will be applied to the first axis and the second axis in the same way.

Next, the position recognizing unit 130 calculates a magnitude $I_m$ of the gradient using gradients $I_x$ and $I_y$ in the x-axis direction and the y-axis direction. The magnitude $I_m$ may be calculated by the following Equation of $I_m = (I_x^2 + I_y^2)^{1/2}$.

Next, the position recognizing unit 130 calculates an angle Ie of the gradient using gradients $I_x$ and $I_y$ in the x-axis direction and the y-axis direction. The angle $I_\theta$ may be calculated by the following Equation of Ie = atan2 $(I_x, I_y)$. Here, atan2(y,x) is an arctangent calculating function having two input variables and for example, may be calculated by the following equation.

$$\text{atan2}(y,x) = \begin{cases} \arctan\dfrac{y}{x} & x > 0 \\[2mm] \arctan\dfrac{y}{x} + \pi & y \geq 0,\ x < 0 \\[2mm] \arctan\dfrac{y}{x} - \pi & y < 0,\ x < 0 \\[2mm] +\dfrac{\pi}{2} & y > 0,\ x = 0 \\[2mm] -\dfrac{\pi}{2} & y < 0,\ x = 0 \\[2mm] \text{underfined} & y = 0,\ x = 0 \end{cases}$$

Next, the position recognizing unit 130 finally extracts an edge image through a non-maximal suppression (NMS) process based on the calculated magnitude of the gradient $I_m$ and the calculated angle of the gradient Ie of each pixel.

That is, the position recognizing unit 130 selects a pixel having the largest magnitude $I_m$ of the gradient among adjacent pixels having the same angle with respect to the angle of the gradient Ie of the pixel as a maximal value.

This process is applied to all pixels to extract an edge formed by one line.

Thereafter, the position recognizing unit 130 extends a region to a predetermined number of pixels which is the most adjacent to each pixel located on the line which forms the edge and selects a pixel having a size which is equal to or larger than a predetermined threshold value in the extended region as an edge.

For example, the position recognizing unit 130 extends the region to two pixels which is the most adjacent to the pixel and selects all pixels having a size which is equal to or larger than the predetermined threshold value among pixels in the extended region as an edge.

This process is applied to all pixels to extract a final edge image which is formed by a plurality of lines extended from the edge formed by one line through the NMS.

Here, the NMS (non-maximal suppression) process may use a non-maximal suppression technique introduced in "Canny, J., A Computational Approach To Edge Detection, IEEE Trans. Pattern Analysis and Machine Intelligence, 8(6):679 to 698, 1986." or may use other various types of non-maximal suppression techniques.

Next, a method of extracting an edge using an approximated difference of Gaussian (ADoG) will be described.

The present invention suggests a new method which calculates an integral image from an original image and performs a box smoothing process on the integral image to obtain a box smoothing image as the box smoothing result and then subtracts the original image from the box smoothing image to finally extract an edge image. In the present invention, a method of extracting an edge by the box smoothing process is referred to as an approximated difference of Gaussian (ADoG).

Here, the position recognizing unit 130 performs a smoothing process on the received stereo image and obtains a smoothing image as the smoothing result. The position recognizing unit 130 compares the smoothing image and the original stereo image to extract an edge and estimates the current position of the mobile robot based on the extracted edge.

Here, the position recognizing unit 130 obtains an integral image from the stereo image, performs a box smoothing process on the obtained integral image to calculate a box smoothing image as the box smoothing processing result, and compares the calculated box smoothing image and the original stereo image to extract the edge as a comparison result.

To this end, the position recognizing unit 130 may include an integral image obtaining unit which obtains an integral image from the stereo image, a box smoothing image calculating unit which performs a box smoothing process on the obtained integral image to calculate a box smoothing image as the box smoothing processing result, and an edge extracting unit which compares the calculated box smoothing image and the original stereo image to extract the edge as a comparison result. The position recognizing unit may further include a position estimating unit.

The integral image obtaining unit of position recognizing unit 130 according to the exemplary embodiment of the present invention obtains an integral image IntegImage from the stereo image orgImage by the following Equation.

$$\text{IntegImage}(x,y) = \sum_{y'=0}^{y} \sum_{x'=0}^{x} orgImage(x',y')$$

Next, the smoothing image calculating unit of the position recognizing unit 130 performs a box blurring process or a box smoothing process on the obtained integral image to calculate a box smoothing image as the box smoothing processing result.

In this case, the box smoothing may be a preprocessing process for removing a noise or extracting contour information, similarly to the Gaussian smoothing.

In the present invention, the box smoothing process has been described as an example, but the present invention is not limited thereto and various smoothing processing technique, for example, Gaussian smoothing may be applied.

Next, the edge extracting unit of the position recognizing unit 130 extracts an edge image $I_{edge}$ by subtracting an original image, that is, the stereo image $I_{source}$ from the box smoothing image $I_{box\_blur}$, which may be calculated by the following equation

$$I_{edge} = I_{box\_blur} - I_{source}.$$

The final edge image may be extracted through the integral process, the smoothing process, and the subtraction process.

Next, a process of performing stereo matching using the extracted edge by the position recognizing unit 130 will be described.

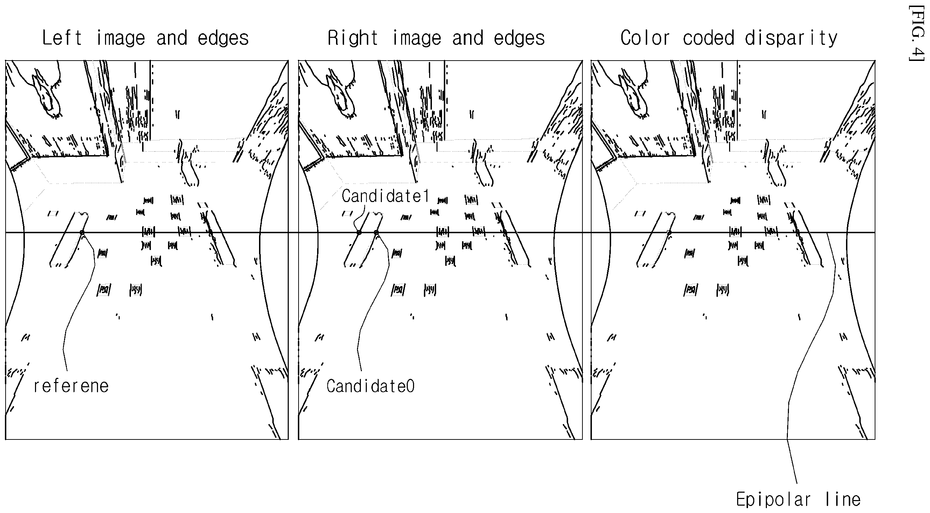

FIG. 4 is a view illustrating a stereo matching principle according to an exemplary embodiment of the present invention.

As illustrated in FIG. 4, edges are obtained from the left image and the right image and then the matching is performed along an epipolar line. In this case, all edges in the image become candidate points and a final candidate point is determined along the gradient direction, among the candidate points.

For example, in a reference of the left image, candidates 0 and 1 in the right image may be determined as candidate points in consideration of the maximum search range. However, in this case, the gradient direction of the candidate 1 is different from the reference so that the candidate 1 is removed from the final candidate points.

In this case, the stereo matching may be performed by extracting n pixels by m by n block matching or along the epipolar line.

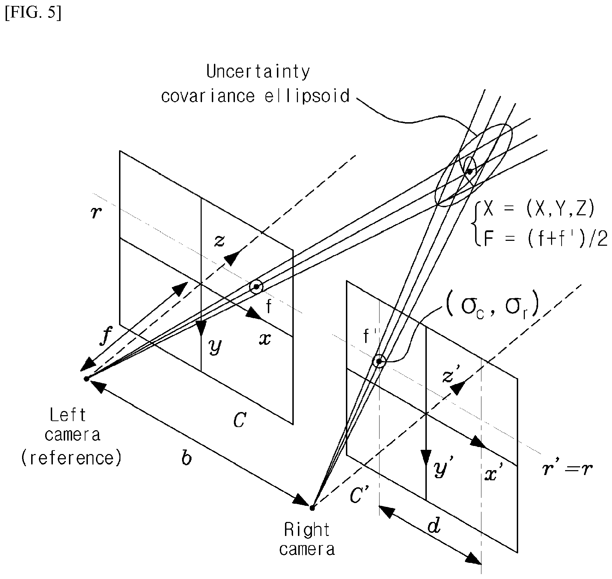

FIG. 5 is a view illustrating uncertainty of a three-dimensional point according to an exemplary embodiment of the present invention.

As illustrated in FIG. 5, the position recognizing unit 130 sets uncertainty or variance $\sigma$ according to a depth value obtained by a result of stereo matching and stores the uncertainty or variance $\sigma$ in the DB. In the case of a wide angle camera, a focal length is very short so that the resolution is low. Therefore, the reliability of the obtained depth value is low so that the update is performed later.

The uncertainty of the three-dimensional point obtained using two cameras is represented by Equation 1.

[Equation 1]

$$\Sigma = \begin{pmatrix} \sigma_X^2 & \sigma_{XY} & \sigma_{XZ} \\ \sigma_{XY} & \sigma_Y^2 & \sigma_{YZ} \\ \sigma_{XY} & \sigma_{YZ} & \sigma_Z^2 \end{pmatrix} = \begin{pmatrix} \dfrac{b^2\sigma_c^2}{d^2} + \dfrac{b^2(c-c_0)\sigma_d^2}{d^4} & \dfrac{(c-c_0)b^2\sigma_d^2(r-r_0)}{d^4} & \dfrac{(c-c_0)b^2\sigma_d^2 f}{d^4} \\ \dfrac{(c-c_0)b^2\sigma_d^2(r-r_0)}{d^4} & \dfrac{b^2\sigma_r^2}{d^2} + \dfrac{b^2(r-r_0)\sigma_d^2}{d^4} & \dfrac{(r-r_0)b^2\sigma_d^2 f}{d^4} \\ \dfrac{(c-c_0)b^2\sigma_d^2 f}{d^4} & \dfrac{(r-r_0)b^2\sigma_d^2 f}{d^4} & \dfrac{f^2 b^2\sigma_d^2}{d^4} \end{pmatrix}$$

Here, $\begin{pmatrix} \sigma_X^2 & \sigma_{XY} & \sigma_{XZ} \\ \sigma_{XY} & \sigma_Y^2 & \sigma_{YZ} \\ \sigma_{XY} & \sigma_{YZ} & \sigma_Z^2 \end{pmatrix}$ indicates an uncertainty covariance ellipsoid and b indicates a distance between cameras, x, y, z indicate a coordinate system of the left image camera and x', y', z' indicates a coordinate system of the right image camera. (c, r) and (c', r') indicate coordinates of matching pixels in the left camera and the right camera, f and f indicate focal distances of the left camera and the right camera. $\sigma_r$ and $\sigma_c$ represent the uncertainty when the feature point is extracted, as axes and ro and $c_0$ represent the optical axis of the camera as a camera coordinate system. Further, d is a difference generated when the feature point is projected to the left side and the right side and generally referred to as a disparity.

At a time when it is determined that the mobile robot moves a predetermined distance, pixels which are stored in the key frame are projected to the current image to find the most similar pixel and update the depth value. The update may be performed by applying a general Bayesian rule.

Here, the position recognizing unit 130 performs stereo matching between the stereo images using the edge extracted from the stereo image to calculate the disparity or the depth value in the pixel included in the stereo image and estimates the current position of the mobile robot using the calculated disparity or depth value. That is, the stereo matching between the stereo images is performed on the pixel corresponding to the edge extracted from the stereo image to calculate the disparity or the depth value and the current position of the mobile robot is estimated using the disparity or the depth value, the optical axis information of the camera, the focal distance information, distance information between the stereo cameras. That is, when the disparity or the depth value in a specific pixel of the stereo image and specification information (the optical axis, the focal distance, the distance between cameras) of the camera which obtains the stereo image are known, a three-dimensional coordinate may be restored in the pixel and the position of the mobile robot may be relatively figured out through the three-dimensional coordinate in the pixels included in the stereo image.

For example, when the optical axes u0 and v0 are known, the focal distance f, the distance b between cameras are known, and the disparity d is known through the stereo matching, the restored three-dimensional coordinates (x, y, z) is

$$\left( \frac{b(u-u0)}{d} , \frac{b(v-v0)}{d} , \frac{fb}{d} \right).$$

Further, a method of figuring out the position of the object from which the stereo image is obtained using the depth value of the stereo image may use various techniques of the related art.

Here, a seed may be set for a pixel selected from the edge of the image. Further, the seed may be set for pixels in which three-dimensional coordinates are restored as described above.

Here, the key frame may be a set of seeds including status information of the mobile robot which is periodically measured and the relationship between the key frame K and the seed s is represented by Equation 2.

[Equation 2]

$$K = \{s_0, s_1, \cdots, s_n\}$$

Here, the seeds s may include an image coordinate, a disparity, a variance of disparity, a pixel value or intensity, a gradient direction, or a gradient angle.

In this case, the gradient direction or the gradient angle Ie is obtained by Equation 3.

[Equation 3]

$$I_\theta = atan2(I_y, I_x)$$

Here, $I_x$ and $I_y$ are gradients in the first axis direction and the second axis direction, and for example, indicate gradients in the x-axis and y-axis directions as described above.

In this case, erroneous information is input due to various variables, specifically, a moving obstacle or a block while the mobile robot is moving and thus a depth value obtained based on erroneous information may have an outlier.

In order to solve the above-mentioned problem, when the obtained depth value is within $1\Sigma$, a variable no_success is increased by one and when the obtained depth value is larger than $1\Sigma$, the variable no_failure is increased by one. Thereafter, only when the reliability no_success/(no_success + no_failure) is larger than a specific value, the depth value is used to recognize the position.

The Bayesian rule which is used to update the depth value is represented by Equation 4.

[Equation 4]

$$\mu = \left[ \sigma_{Z_2}^2/(\sigma_{Z_1}^2 + \sigma_{Z_2}^2) \right]\mu_{Z_1} + \left[ \sigma_{Z_1}^2/(\sigma_{Z_1}^2 + \sigma_{Z_2}^2) \right]\mu_{Z_2}$$

$$1/\sigma^2 = (1/\sigma_{Z_1}^2) + (1/\sigma_{Z_2}^2)$$

Here, even though the updating process of the depth value z has been described, the x-value and the y-value vary depending on z. Therefore, x, y, and z are updated so that the position is figured out and the updated x, y, z are used to figure the position of the camera in the contrary way.

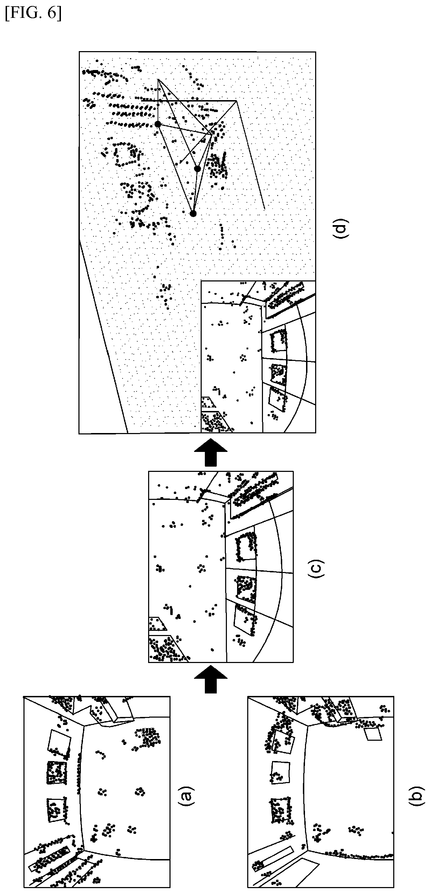

FIG. 6 is a view illustrating three-dimensional information on an edge according to an exemplary embodiment of the present invention. FIG. 6(a) is an image representing a depth value which is projected to the left image camera, FIG. 6(b) is an image representing a depth value which is projected to the right image camera, FIG. 6(c) is an image representing a depth value obtained through the updating process, and FIG. 6(d) is an image representing projection to a matching point and a depth value.

As illustrated in FIG. 6, it is understood that when the depth value is repeatedly updated, the three-dimensional information on the edge may be consistently obtained.

The information of the IMU is very important in a situation where it is difficult to recognize the environment by the camera. However, in cheap IMUs, a bias is significantly deformed or hardly estimated. In order to solve the above-mentioned problem, the bias is obtained by stopping the robot for a moment and taking an average. In this case, the user may think that the mobile robot is not intelligent and the working speed is lowered.

In order to solve the above-mentioned problem, the position recognizing unit 130 updates the bias during the movement.

It is assumed that $\theta_g$ is an angular velocity obtained by a gyro sensor and $\theta_c$ is an angular velocity obtained by a wide angle stereo vision. However, an error may be incurred between angular velocities due to the bias while the mobile robot is moving. The error $\theta_e$ may be defined by Equation 5.

$$[\text{Equation 5}]$$

$$\theta_e = \theta_g - \theta_c$$

In this case, $\theta_e$ may be a bias. When speedy rotation or disturbance is generated, the bias is updated by applying Bayesian rule as represented by Equation 6.

$$[\text{Equation 6}]$$

$$\text{If, } |\theta| < \text{threshold}_{moving}, \ \mu_n = \theta_e, \ \sigma^2 = 1 \deg/\sec \times 0.1 \deg/\sec$$

When the mobile robot may stop during the movement, the bias is updated as represented by Equation 7.

$$[\text{Equation 7}]$$

$$\text{If, } |\theta| < \text{threshold}_{stop}, \ \mu_n = \theta_e, \ \sigma^2 = 0.1 \deg/\sec \times 0.1 \deg/\sec$$

Since the bias is corrected in real time by the above-described updating process, even when the camera cannot be used momentarily, the odometry information using the IMU may be maintained at a predetermined level of accuracy using the optimal bias.

The position recognizing unit 130 predicts current state information, for example, a pose or a position based on one odometry information selected from first odometry information and second odometry information.

The position recognizing unit 130 may estimate the current position using at least one key frame among the previously stored key frame set based on the status information predicted as described above

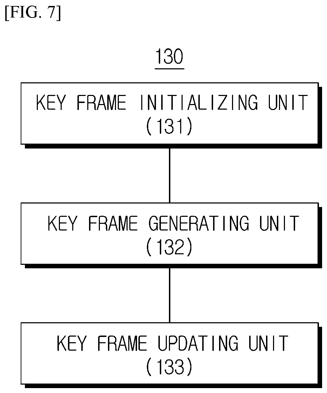

FIG. 7 is a view illustrating a detailed configuration of a position recognizing unit according to an exemplary embodiment of the present invention.

As illustrated in FIG. 7, the position recognizing unit 130 according to the exemplary embodiment of the present invention includes a key frame initializing unit 131, a key frame generating unit 132, and a key frame updating unit 133.

The key frame initializing unit 131 may initialize seeds which configure the key frame at a start position. In this case, the key frame initializing unit 131 initializes the disparity of the seeds.

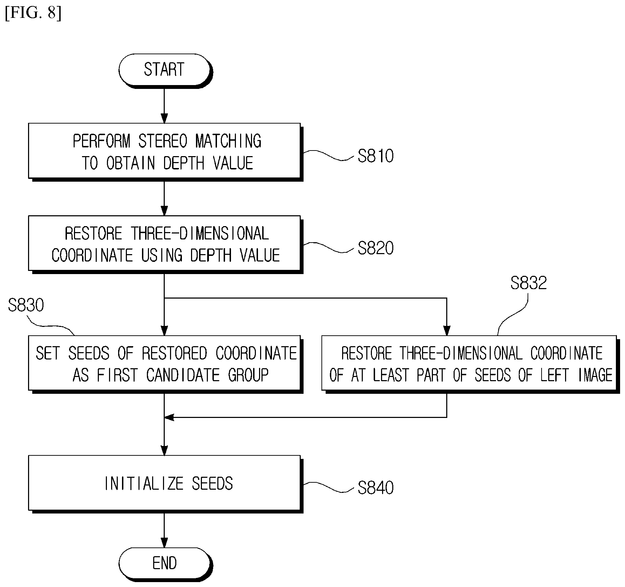

FIG. 8 is a view illustrating a key frame initializing process according to an exemplary embodiment of the present invention.

As illustrated in FIG. 8, the key frame initializing unit 131 performs stereo matching on the edge extracted from the stereo image photographed at the start position to obtain a depth value in step S810 and restores the three-dimensional coordinates (x, y, z) using the obtained depth value in step S820. The restored three-dimensional coordinates are represented by Equation 8.

[Equation 8]

$$x = \frac{b(u-u0)}{d}, y = \frac{b(v-v0)}{d}, z = \frac{fb}{d}$$

Here, u0 and v0 indicate optical axes, f indicates a focal distance, b indicates a distance between cameras, and d indicates a disparity.

Next, the key frame initializing unit 131 sets pixels or seeds of the restored coordinates as a first candidate group in step S830 and sets pixels having a magnitude of the gradient which is equal to or larger than a threshold value in the left image as a second candidate group in step S832.

Next, the key frame initializing unit 131 initializes the disparity of the seeds. That is, when there is the first candidate group around the seed and the distance therebetween is a predetermined distance, for example, within a distance corresponding to two pixels, the key frame initializing unit 131 initializes the disparity using the disparity of the first candidate set and otherwise, the disparity is set to zero.

The key frame generating unit 132 may generate a new key frame while moving the position. In this case, when the error between the image projected using the key frame and the photographed image is large so that the position recognizing accuracy is lowered, the key frame generating unit 132 generates a new key frame.

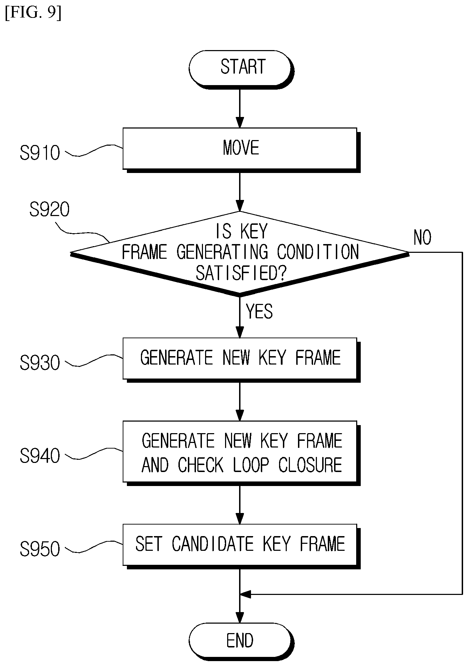

FIG. 9 is a view illustrating a key frame generating process according to an exemplary embodiment of the present invention.

As illustrated in FIG. 9, when the mobile robot moves in step S910, the key frame generating unit 132 checks whether the predetermined key frame generating condition is satisfied in the position in step S920.

In this case, the predetermined key frame generating condition includes 1) a case when a distance between the position where the key frame is generated and the camera is t or larger, 2) a case when a relative angle between the position where the key frame is generated and the camera is a or larger, and 3) a case when k or more seeds among seeds included in the key frame cannot be used.

For example, generally, t = 0.5 m, a = 15 degree, k = 60% and when the mobile robot moves on a two-dimensional plane, t = 0.7 m, a = 20 degree, k = 50%.

Even though variables t, a, and k in the key frame generating condition are described as specific values, the variables are not limited thereto and may be changed if necessary.

Next, when the key frame generating condition is satisfied as the checking result, the key frame generating unit 132 may generate a new key frame in step S930. That is, the key frame generating unit 132 generates the new key frame using the depth value obtained by performing stereo matching and some seeds of the key frame.

In this case, the key frame generating unit 132 uses a seed which is used a predetermined number of times when the key frame is updated or a seed in which a variance of disparity is within a predetermined range, among seeds in the key frame.

Next, the key frame generating unit 132 checks a loop closure for the generated new key frame in step S940 to generate a candidate key frame of the key frame set as the checking result in step S950.

For example, the key frame generating unit 132 obtains a relative pose between projection images by the camera and the key frame of the related art using a direct tracking technique on the key frame of the related art which is within a distance $t_c$ from the camera and has a relative angle within $a_c$ and when the cost for the obtained relative pose is $c_c$ or lower, sets the new key frame as a candidate frame.

As another example, the key frame generating unit 132 primarily checks a qualification of the key frame of the related art which is within a distance $3t_c$ from the camera and has a relative angle within $3a_c$ using a scene descriptor and secondarily obtains a relative pose between projection images by the camera and the key frame of the related art using a direct tracking technique and when the cost for the obtained relative pose is $c_c$ or lower, sets the new key frame as a candidate frame.

Thereafter, the key frame generating unit 132 provides the set candidate frame to the map creating unit so that the map creating unit reconstitutes a pose graph to maintain consistency of the map.

When the current position is determined, the key frame updating unit 133 updates the key frame. In this case, the key frame updating unit 133 updates the disparity of the seeds.

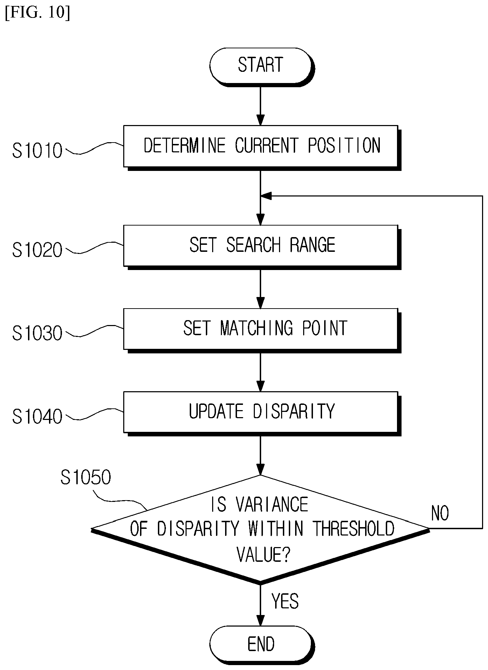

FIG. 10 is a view illustrating a key frame updating process according to an exemplary embodiment of the present invention and

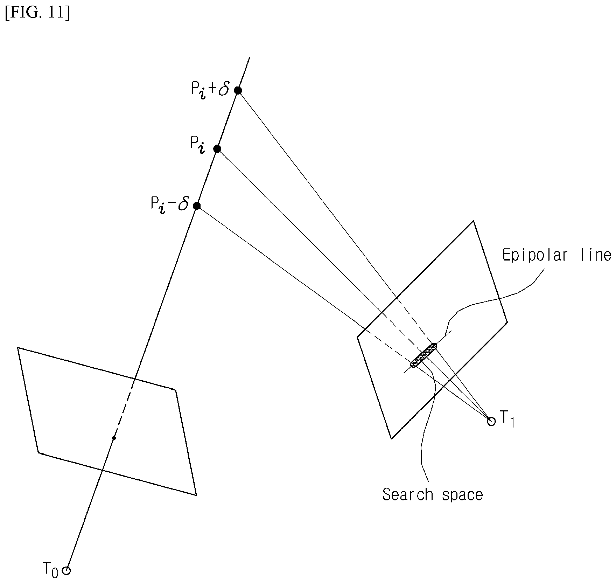

FIG. 11 is a view illustrating a search range setting principle using a deviation of parallax.

As illustrated in FIG. 10, when the current position is determined, the key frame updating unit 133 sets a search range in the image using the image and the key frame in step S1010.

Referring to FIG. 11, when the three-dimensional coordinate has the uncertainty of σ in the seed of the key frame, the search range $P_i - \delta$ to $P_i + \delta$ may be determined by the projection of the seed.

Next, the key frame updating unit 133 sets a matching point within the set search range in step S1020.

Referring to FIG. 11, an image around points on an epipolar line and an image around the seed are compared and a point having the highest similarity as a comparison result is set as a matching point. For example, the similarity between images is calculated using sum of squared differences (SSD).

Next, the key frame updating unit 133 updates a disparity based on the set matching point in step S1030. In this case, the key frame updating unit 133 updates the disparity of the seeds using a Bayesian rule.

Next, the key frame updating unit 133 checks whether a variance of the disparity is within a predetermined threshold value in step S1030 and when the variance is within the threshold value as the checking result, ends the updating of the disparity.

In contrast, when the variance exceeds the threshold value as the checking result, the key frame updating unit 133 repeatedly performs the process of updating the disparity until the variance of the disparity is within the threshold value.

The obstacle sensing unit 140 receives the stereo image from the camera 110 to extract a predetermined number of horizontal lines in the received stereo image. Here, the predetermined number is at least two and desirably three.

The obstacle sensing unit 140 performs dense stereo matching along the extracted horizontal line to obtain distance information to the obstacle as the result.

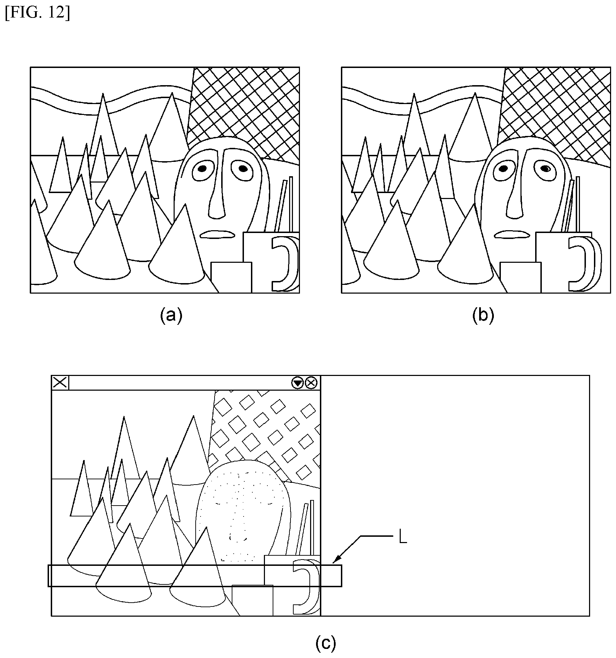

FIG. 12 is a view illustrating an obstacle sensing process according to an exemplary embodiment of the present invention.

As illustrated in FIG. 12, the obstacle sensing unit 140 performs highly dense stereo matching based on the received left and right stereo images as illustrated in FIGS. 12(a) and 12(b) to calculate a depth value as the result. Here, in the image of FIG. 12(c), the depth value calculated as described above is represented by gray scales. Further, FIG. 12(c) illustrates a linear region L which is used to sense the obstacle.

In this case, since the depth value for the entire region cannot be calculated by a mobile robot mounted with a small-size processor, in the exemplary embodiment of the present invention, a depth value is extracted only from a partial region.

The map creating unit 150 is provided with current position information which is estimated by the position recognizing unit 130, reconstructs a pose graph based on position information, and updates the previously stored key frame set based on the reconstructed pose graph.

The DB 160 stores the key frame set generated in accordance with movement of the mobile robot.

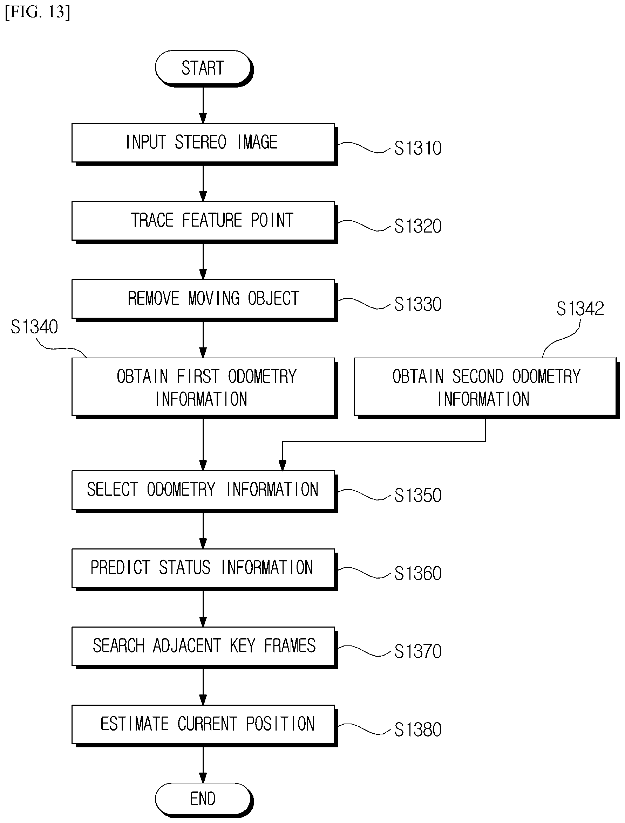

FIG. 13 is a view illustrating a method for recognizing a position of a mobile robot according to an exemplary embodiment of the present invention.

As illustrated in FIG. 13, when an apparatus for recognizing the position of the mobile robot (hereinafter, referred to as a position recognizing apparatus) according to an exemplary embodiment of the present invention receives a stereo image from the camera in step S910, extracts a feature point from the input stereo image and consistently traces the extracted feature point in the unit of frame in step S920.

Next, the position recognizing apparatus may remove a moving object in the stereo image in step S930.

For example, the position recognizing apparatus compares the current frame and the last n-th frame to remove an inconsistent feature which may be determined as a moving object as the comparison result.

Next, the position recognizing apparatus performs visual odometry based on the traced feature point to obtain first odometry information as the result in step S940 and obtain second odometry information through inertia information based internal odometry in step S942.

Next, the position recognizing apparatus selects one odometry information between obtained first odometry information and second odometry information in step S950 and predicts status information using the selected odometry information and pose information in step S960.

In this case, the position recognizing apparatus selects the first odometry information when the first odometry information satisfies a predetermined condition and selects the second odometry information when the first odometry information does not satisfy the predetermined condition.

Here, when it is determined whether the predetermined condition is satisfied, it is determined that the odometry information, for example, a change rate of the position information is within a predetermined threshold value.

Next, the position recognizing apparatus searches at least one key frame among the previously stored key frame set based on the predicted status information in step S970 and estimates the current position using at least one searched key frame in step S980.

That is, the position recognizing apparatus forms a virtual space using the searched key frame to divide the formed virtual space into a plurality of regions, projects seeds in a key frame in each of the plurality of divided regions to calculate an edge size corresponding to the seed as the projecting result, selects a region having the largest sum of the calculated edge sizes as a position candidate, and then divides the selected region into a plurality of regions to repeatedly perform a process of selecting a position candidate, thereby determining a final position.

In this case, the position may be accurately estimated as the number of adjacent key frames is large.

The position recognizing apparatus according to the exemplary embodiment may be applied to an autonomous cleaning robot or service robot. For example, the cleaning robot autonomously moves in an indoor environment or an outdoor environment. When the cleaning robot moves, the cleaning robot meets various obstacles such as a wall, a guardrail, a desk, or furniture and the autonomous cleaning robot determines a moving route using the position of the robot and the position of the obstacle in the cleaning area and moves along the moving route. According to the exemplary embodiment, the autonomous cleaning robot includes the stereo camera, specifically, a wide angle stereo camera as an image capturing unit to obtain an external image. By doing this, the autonomous cleaning robot estimates its own position, determines the moving route, and moves using information on the external environment obtained thereby, specifically, using the feature point related to an edge.

Specifically, in the case of the cleaning robot which autonomously moves based on simultaneous localization and map-building (SLAM), the exemplary embodiment may be used to estimate its own position on the constructed lattice map, estimate a position of the obstacle, determine a movement route to avoid collision with the obstacle using the estimated position relationship or determine an optimal route.

In the exemplary embodiment, the odometry information may be data which is used to estimate the positional change of the mobile robot in accordance with the time. For example, the odometry information may be information obtained from a wheel mounted in the mobile robot or rotary encoders in a legged joint. The status information such as a moving distance of the mobile robot or a number of rotations of the wheel may be calculated using the odometry information. Further, the space where the mobile robot is currently located may be understood through the status information so that the odometry information may be used to determine the key frame during the image processing.

The position recognizing method according to the exemplary embodiment of the present invention may be implemented as computer readable software and the software may be executed in a processor mounted in the autonomous cleaning robot.

Even though all components of the exemplary embodiment may be combined as one component or operates to be combined, the present invention is not limited to the exemplary embodiment. In other words, one or more of all of the components may be selectively combined to be operated within a scope of the present invention. Further, all of the components may be implemented as one independent hardware but a part or all of the components are selectively combined to be implemented as a computer program which includes a program module which performs a part or all of functions combined in one or plural hardwares. Further, such a computer program may be stored in a computer readable media such as a USB memory, a CD disk, or a flash memory to be read and executed by a computer to implement the exemplary embodiment of the present invention. The recording media of the computer program may include a magnetic recording medium, an optical recording medium, or a carrier wave medium.

The exemplary embodiments of the present invention which have been described above are examples and it is obvious to those skilled in the art that various changes or modifications may be made without departing from the spirit and scope of the present invention. Therefore, the exemplary embodiments of the present invention are provided for illustrative purposes only but not intended to limit the technical spirit of the present invention. The scope of the technical concept of the present invention is not limited thereto. The protective scope of the present invention should be construed based on the following claims, and all the technical concepts in the equivalent scope thereof should be construed as falling within the scope of the present invention.

**Claims**

1. An apparatus for updating a map of a mobile robot, the apparatus comprising:

   a key frame initializing unit which initializes seeds of a key frame at a start position of the mobile robot;
   a key frame updating unit which projects the seeds of the key frame when a current position is determined based on movement of the mobile robot, and updates the key frame in regard to the current position based on a disparity of the projected seeds.

2. The apparatus of claim 1, wherein the seeds of the key frame includes an image coordinate, a disparity, a variance of disparity, a pixel value, and a gradient direction.

3. The apparatus of claim 1, wherein the key frame initializing unit performs stereo matching on an edge extracted from a photographed stereo image to obtain a depth value and initializes a disparity of the seed of a coordinate which is restored using the depth value with a disparity of a seed within a predetermined distance.

4. The apparatus of claim 2, wherein the key frame initializing unit sets seeds in the restored coordinate as a first candidate group and sets seeds having a magnitude of the gradient which is larger than a threshold value as a second candidate group, and initializes a disparity of the first candidate group to be a disparity of the seed when the distance between adjacent first candidate groups is within a predetermined distance.

5. The apparatus of claim 1, wherein the key frame updating unit sets a search range in the image using the image and the key frame when the current position is determined, sets a matching point using a disparity of seeds projected within the set search area, and updates a disparity of the seed in the key frame for the current position based on the set matching point.

6. The apparatus of claim 5, wherein the key frame updating unit sets a point having the highest similarity between corresponding two points within the set search range as the matching point.

7. The apparatus of claim 1, further comprising:

a key frame generating unit which generates a key frame in accordance with a predetermined key frame generating condition when the mobile robot moves.

8. The apparatus of claim 7, wherein the key frame generating unit checks whether to satisfy the predetermined key frame generating condition and when the key frame generating condition is satisfied as the checking result, generates a key frame using a depth value which is obtained by stereo matching.

9. The apparatus of claim 8, wherein the key frame generating unit generates a key frame using a depth value obtained by performing stereo matching and some of seeds of the key frame.

10. The apparatus of claim 7, wherein the key frame generating unit checks a loop closure for the generated key frame to set a key frame which constitutes the key frame set.

11. A method for updating a map of a mobile robot, the method comprising:

initializing seeds of a key frame at a start position of the mobile robot; and
projecting the seeds of the key frame when a current position is determined based on movement of the mobile robot, and updating the key frame in regard to the current position based on a disparity of the projected seeds.

12. The method of claim 11, wherein the seeds of the key frame includes an image coordinate, a disparity, a variance of disparity, a pixel value, and a gradient direction.

13. The method of claim 11, wherein in the initializing, stereo matching is performed on an edge extracted from a photographed stereo image to obtain a depth value and a disparity of the seed of a coordinate which is restored using the depth value is initialized to a disparity of a seed within a predetermined distance.

14. The method of claim 12, wherein in the initializing, seeds in the restored coordinate are set as a first candidate group and seeds having a magnitude of the gradient which is larger than the threshold value are set as a second candidate group, and a disparity of the first candidate group is initialized to a disparity of the seed when the distance between adjacent first candidate groups is within a predetermined distance.

15. The method of claim 11, wherein in the updating, a search range in the image is set using the image and the key frame when the current position is determined, a matching point is set using a disparity of seeds projected within the set search area, and a disparity of the seed in the key frame for the current position is updated based on the set matching point.

16. The method of claim 15, wherein in the updating, a point having the highest similarity between corresponding two points within the set search range is set as the matching point.

17. The method of claim 11, further comprising:

generating a key frame according to a predetermined key frame generating condition when the mobile robot moves.

18. The method of claim 17, wherein in the generating, it is checked whether to satisfy the predetermined key frame generating condition and a key frame is generated using a depth value which is obtained by stereo matching when the key frame generating condition is satisfied as the checking result.

19. The method of claim 18, wherein in the generating, a key frame is generated using a depth value obtained by performing stereo matching and some of seeds of the key frame.

20. The method of claim 17, wherein in the generating, a loop closure for the generated key frame is checked to set a key frame which constitutes the key frame set.

[FIG. 1]

```
                    ┌─────────────┐
                    │  OBSTACLE   │
                    │SENSING UNIT │─────────────┐
                    │   (140)     │             │
                    └──────┬──────┘             │
                           │                    │
┌──────────────┐    ┌──────┴──────┐      ┌──────┴──────┐
│   CAMERA     │    │  POSITION   │      │             │
│   (110)      │────│ RECOGNIZING │──────│     DB      │
└──────────────┘    │   UNIT      │      │   (160)     │
                    │   (130)     │      │             │
┌──────────────┐    │             │      │             │
│   IMU        │────│             │      │             │
│   (120)      │    └──────┬──────┘      └──────┬──────┘
└──────────────┘           │                    │
                    ┌──────┴──────┐             │
                    │MAP CREATING │             │
                    │   UNIT      │─────────────┘
                    │   (150)     │
                    └─────────────┘
```

[FIG. 2]

ROI

10

[FIG. 3]

[FIG. 4]

[FIG. 5]

Uncertainty covariance ellipsoid

$$\begin{cases} X = (X,Y,Z) \\ F = (f+f')/2 \end{cases}$$

$(\sigma_c, \sigma_r)$

Left camera (reference)

Right camera

$r' = r$

[FIG. 6]

[FIG. 7]

130

KEY FRAME INITIALIZING UNIT
(131)

KEY FRAME GENERATING UNIT
(132)

KEY FRAME UPDATING UNIT
(133)

[FIG. 8]

START

PERFORM STEREO MATCHING
TO OBTAIN DEPTH VALUE — S810

RESTORE THREE-DIMENSIONAL
COORDINATE USING DEPTH VALUE — S820

S830

SET SEEDS OF RESTORED COORDINATE
AS FIRST CANDIDATE GROUP

S832

RESTORE THREE-DIMENSIONAL COORDINATE
OF AT LEAST PART OF SEEDS OF LEFT IMAGE

INITIALIZE SEEDS — S840

END

[FIG. 9]

```
                        ┌──────────────┐
                        │    START     │
                        └──────┬───────┘
                               │
                               ▼
S910 ───────────┌──────────────────────────────┐
                │            MOVE                │
                └───────────────┬────────────────┘
                                │
                                ▼
S920 ─────────          ╱╲
              ╱─────────────────────────────────╲          NO
             ◇       IS KEY                       ◇──────────┐
              ╲  FRAME GENERATING CONDITION      ╱           │
               ╲        SATISFIED?              ╱            │
                ╲──────────────────────────────╱             │
                               │ YES                         │
                               ▼                             │
S930 ───────────┌──────────────────────────────┐            │
                │   GENERATE  NEW  KEY  FRAME    │            │
                └───────────────┬────────────────┘           │
                                │                            │
                                ▼                            │
S940 ───────────┌──────────────────────────────┐            │
                │   GENERATE  NEW  KEY  FRAME    │            │
                │   AND  CHECK  LOOP  CLOSURE    │            │
                └───────────────┬────────────────┘           │
                                │                            │
                                ▼                            │
S950 ───────────┌──────────────────────────────┐            │
                │   SET  CANDIDATE  KEY  FRAME   │            │
                └───────────────┬────────────────┘           │
                                │                            │
                                ◄────────────────────────────┘
                                │
                                ▼
                        ┌──────────────┐
                        │     END      │
                        └──────────────┘
```

[FIG. 10]

```
                    ┌──────────────┐
                    │    START     │
                    └──────┬───────┘
                           │
                           ▼
 S1010 ────┐    ┌─────────────────────────────┐
           │    │  DETERMINE CURRENT POSITION  │
                └──────────────┬──────────────┘
                               │
                               ▼ ◄──────────────────┐
 S1020 ────┐    ┌─────────────────────────────┐    │
           │    │       SET SEARCH RANGE       │    │
                └──────────────┬──────────────┘    │
                               │                     │
                               ▼                     │
 S1030 ────┐    ┌─────────────────────────────┐    │
           │    │      SET MATCHING POINT      │    │
                └──────────────┬──────────────┘    │
                               │                     │
                               ▼                     │
 S1040 ────┐    ┌─────────────────────────────┐    │
           │    │       UPDATE DISPARITY       │    │
                └──────────────┬──────────────┘    │
                               │                     │
                               ▼                     │
 S1050 ────┐         ╱─────────────────╲     NO      │
           └───────◄  IS VARIANCE        ├───────────┘
                     OF DISPARITY WITHIN THRESHOLD
                     ╲      VALUE?      ╱
                       ╲──────┬───────╱
                              │ YES
                              ▼
                    ┌──────────────┐
                    │     END      │
                    └──────────────┘
```

[FIG. 11]

$P_i+\delta$

$P_i$

$P_i-\delta$

Epipolar line

$T_1$

Search space

$T_0$

EP 3 159 121 A1

[FIG. 12]

(a)

(b)

(c)

27

[FIG. 13]

```
                    ┌─────────┐
                    │  START  │
                    └────┬────┘
                         │
                         ▼
          ┌────────────────────────────┐
          │    INPUT STEREO IMAGE       │── S1310
          └──────────────┬─────────────┘
                         │
                         ▼
          ┌────────────────────────────┐
          │    TRACE FEATURE POINT      │── S1320
          └──────────────┬─────────────┘
                         │
                         ▼
          ┌────────────────────────────┐
          │    REMOVE MOVING OBJECT     │── S1330
          └──────────────┬─────────────┘
                         │
       S1340             │                              S1342
          ▼              ▼                                 ▼
   ┌──────────────────────────┐        ┌──────────────────────────────┐
   │    OBTAIN FIRST ODOMETRY  │        │   OBTAIN SECOND ODOMETRY      │
   │        INFORMATION        │        │        INFORMATION           │
   └────────────┬─────────────┘        └──────────────┬───────────────┘
                │                                      │
                ▼              ◄──────────────────────┘
          ┌────────────────────────────┐
          │  SELECT ODOMETRY INFORMATION│── S1350
          └──────────────┬─────────────┘
                         │
                         ▼
          ┌────────────────────────────┐
          │  PREDICT STATUS INFORMATION │── S1360
          └──────────────┬─────────────┘
                         │
                         ▼
          ┌────────────────────────────┐
          │  SEARCH ADJACENT KEY FRAMES │── S1370
          └──────────────┬─────────────┘
                         │
                         ▼
          ┌────────────────────────────┐
          │  ESTIMATE CURRENT POSITION  │── S1380
          └──────────────┬─────────────┘
                         │
                         ▼
                    ┌─────────┐
                    │   END   │
                    └─────────┘
```

<table>
<tr><td colspan="2">**INTERNATIONAL SEARCH REPORT**</td><td>International application No.</td></tr>
<tr><td colspan="2"></td><td>**PCT/KR2015/006153**</td></tr>
</table>

| | |
|---|---|
| **A. CLASSIFICATION OF SUBJECT MATTER** | |
| ***B25J 13/08(2006.01)i, B25J 9/16(2006.01)i*** | |
| According to International Patent Classification (IPC) or to both national classification and IPC | |

**B. FIELDS SEARCHED**

Minimum documentation searched (classification system followed by classification symbols)
B25J 13/08; B25J 9/00; B25J 19/04; G05D 1/02; B25J 5/00; B25J 9/16

Documentation searched other than minimum documentation to the extent that such documents are included in the fields searched
Korean Utility models and applications for Utility models: IPC as above
Japanese Utility models and applications for Utility models: IPC as above

Electronic data base consulted during the international search (name of data base and, where practicable, search terms used)
eKOMPASS (KIPO internal) & Keywords: map, map, update, disparity, projection, key frame, seed

**C. DOCUMENTS CONSIDERED TO BE RELEVANT**

| Category* | Citation of document, with indication, where appropriate, of the relevant passages | Relevant to claim No. |
|---|---|---|
| A | KR 10-0834577 B1 (ELECTRONICS AND TELECOMMUNICATIONS RESEARCH INSTITUTE) 02 June 2008<br>See claims 1, 2, paragraphs [0036]-[0058] and figures 1-3. | 1-20 |
| A | KR 10-2011-0047797 A (YUJIN ROBOT CO., LTD.) 09 May 2011<br>See claims 1, 4, paragraphs [0032]-[0060], [0073]-[0086] and figures 1, 4. | 1-20 |
| A | KR 10-2012-0070291 A (SAMSUNG ELECTRONICS CO., LTD.) 29 June 2012<br>See claims 1-5, paragraphs [0072]-[0088] and figure 4. | 1-20 |

| | |
|---|---|
| ☐ Further documents are listed in the continuation of Box C. | ☒ See patent family annex. |

\*    Special categories of cited documents:
"A"   document defining the general state of the art which is not considered to be of particular relevance
"E"   earlier application or patent but published on or after the international filing date
"L"   document which may throw doubts on priority claim(s) or which is cited to establish the publication date of another citation or other special reason (as specified)
"O"   document referring to an oral disclosure, use, exhibition or other means
"P"   document published prior to the international filing date but later than the priority date claimed

"T"   later document published after the international filing date or priority date and not in conflict with the application but cited to understand the principle or theory underlying the invention
"X"   document of particular relevance; the claimed invention cannot be considered novel or cannot be considered to involve an inventive step when the document is taken alone
"Y"   document of particular relevance; the claimed invention cannot be considered to involve an inventive step when the document is combined with one or more other such documents, such combination being obvious to a person skilled in the art
"&"   document member of the same patent family

| Date of the actual completion of the international search | Date of mailing of the international search report |
|---|---|
| 31 JULY 2015 (31.07.2015) | **31 JULY 2015 (31.07.2015)** |
| Name and mailing address of the ISA/**KR**<br>Korean Intellectual Property Office<br>Government Complex-Daejeon, 189 Seonsa-ro, Daejeon 302-701, Republic of Korea<br>Facsimile No. 82-42-472-7140 | Authorized officer<br><br><br>Telephone No. |

Form PCT/ISA/210 (second sheet) (July 2009)

INTERNATIONAL SEARCH REPORT
Information on patent family members

International application No.

**PCT/KR2015/006153**

| Patent document cited in search report | Publication date | Patent family member | Publication date |
|---|---|---|---|
| KR 10-0834577 B1 | 02/06/2008 | US 2008-0215184 A1 | 04/09/2008 |
| KR 10-2011-0047797 A | 09/05/2011 | CN 102656532 A | 05/09/2012 |
| | | EP 2495632 A1 | 05/09/2012 |
| | | JP 05-490911 B2 | 14/05/2014 |
| | | JP 2013-508874 A | 07/03/2013 |
| | | KR 10-1083394 B1 | 14/11/2011 |
| | | US 2012-0213443 A1 | 23/08/2012 |
| | | US 8849036 B2 | 30/09/2014 |
| | | WO 2011-052826 A1 | 05/05/2011 |
| KR 10-2012-0070291 A | 29/06/2012 | US 2012-0155775 A1 | 21/06/2012 |
| | | US 8873831 B2 | 28/10/2014 |

Form PCT/ISA/210 (patent family annex) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 2015006153 W

- KR 1020140073708

**Non-patent literature cited in the description**

- **CANNY, J.** A Computational Approach To Edge Detection. *IEEE Trans. Pattern Analysis and Machine Intelligence,* 1986, vol. 8 (6), 679-698